# EUROPÄISCHE PATENTANMELDUNG

(11) **EP 4 047 195 A1**
(43) Veröffentlichungstag der Anmeldung: **24.08.2022**
(21) Anmeldenummer: 22155409.0
(22) Anmeldetag: 07.02.2022
(51) Int. Cl.: F01N 3/027, F01N 3/20, F01N 13/18, H05B 3/06

(54) **HALTER FÜR EIN ELEKTRISCHES HEIZELEMENT IN EINER ABGASNACHBEHANDLUNGSVORRICHTUNG**

(30) Priorität: 11.02.2021 DE 102021103287; 22.02.2021 DE 102021104117
(71) Anmelder: Benteler Automobiltechnik GmbH, 33102 Paderborn (DE)
(72) Erfinder: Grußmann, Elmar, 33184 Altenbeken (DE); Rusche, Ulrich, 59457 Werl (DE)
(74) Vertreter: Osterhoff, Utz

(57) **Zusammenfassung**

Abgasbehandlungsvorrichtung (1) zur Anordnung in einem Abgasstrang eines Kraftfahrzeuges, aufweisend ein Heizelement (3), welches einer Abgasnachbehandlungskomponente, insbesondere einem Katalysator (2) zugeordnet ist. Das Heizelement (3) ist durch einen Heizleiter und einen mit diesem gekoppelten Halter (6) ausgebildet, wobei der Halter (6) sich über die Querschnittsfläche des Heizelementes (3) erstreckt und der Halter (6) durch eine gitterartige Struktur ausgebildet ist, wobei die gitterartige Struktur durch unregelmäßig miteinander gekoppelte bogenförmige Speichen (9) ausgebildet ist, wobei der Heizleiter und der Halter (6) im Längsschnitt in Abgasströmungsrichtung (A) eine muldenförmige Konfiguration aufweisen.

## Beschreibung

Die vorliegende Erfindung betrifft eine Abgasbehandlungsvorrichtung in einem Abgasstrang eines Kraftfahrzeuges gemäß den Merkmalen im Oberbegriff von Anspruch 1.

Um der Gesetzgebung und Markt- bzw. Kundenerwartungen zu entsprechen, werden Verbrennungsmotoren heutzutage auf höchste Effizienz getrimmt und produzieren so wenig Abwärme wie möglich.

Im Widerspruch dazu steht eine schnelle Aufheizung der Abgaskomponenten nach dem Kaltstart und das Halten dieses Temperaturbereichs während den gängigen Testzyklen, um optimale Reaktionsbedingungen für die Umsetzung von schädlichen Abgasbestandteilen in nicht schädliche Elemente zu gewährleisten.

Dieser Light-Off beginnt bei Katalysatoren ab ca. 180°C, die Reaktionsgeschwindigkeit steigt mit der Temperatur. Da kommende Zulassungsbeschränkungen die Abgaszusammensetzung direkt nach Kaltstart beurteilen, sollte die Light-Off Temperatur schnellstmöglich erreicht werden.

Hierzu werden Heizelemente eingesetzt, welche ein aktives Thermomanagement der Abgasanlage innerhalb gewisser Grenzen erlauben. Diese sind aktuell meist aus Dünnblechwabenstrukturen (Finnenstrukturen) spiralförmig gewickelt. Die Trennung der Leiter (Wabenstränge) wird durch einen Luftspalt sichergestellt. Durch Hochtemperaturlöten wird der Gesamtaufbau versteift. Die elektrische Isolierung der gesamten Heizmatrix erfolgt meistens über Keramikstifte (Support-Pins), wobei diese in den Katalysatorkörper eingeschoben werden.

Aus der DE 20 2020 104 976 U1 ist eine Abgasbehandlungsvorrichtung zur Anordnung in einem Abgasstrang eines Kraftfahrzeuges gemäß den Merkmalen im Oberbegriff von Anspruch 1 bekannt.

Aufgabe der vorliegenden Erfindung ist es, ausgehend vom Stand der Technik eine Heizvorrichtung in einem Abgasstrang anzuordnen, welche kostengünstig und einfach produzierbar ist, gleichzeitig eine hoch effiziente Heizleistung bereitstellt und insbesondere eine hohe thermische Resistenz aufweist.

Die zuvor genannte Aufgabe wird erfindungsgemäß mit einer Abgasbehandlungsvorrichtung zur Anordnung in einem Abgasstrang eines Kraftfahrzeuges mit den Merkmalen im Anspruch 1 gelöst.

Vorteilhafte Ausgestaltungsvarianten sind Gegenstand der abhängigen Ansprüche.

Die vorliegende Erfindung betrifft eine Abgasbehandlungsvorrichtung zur Anordnung in einem Abgasstrang eines Kraftfahrzeuges. Dieses Kraftfahrzeug weist einen Verbrennungsmotor auf. Der Verbrennungsmotor kann beispielsweise ein Diesel- oder Ottomotor sein. Auch kann es sich um ein Hybridkraftfahrzeug handeln, welches einen zusätzliches Verbrennungsmotor aufweist. Es handelt sich bei der Abgasbehandlungsvorrichtung somit um eine Abgasnachbehandlungsvorrichtung.

Das Kraftfahrzeug weist einen Abgasstrang auf. In dem Abgasstrang ist eine Abgasnachbehandlungskomponente, insbesondere in Form eines Katalysators angeordnet. Dem Katalysator ist in Abgasströmungsrichtung in dem Abgasstrang vor- bzw. nachgeschaltet ein Heizelement. Das Heizelement dient zur elektrischen externen Aufheizung des Katalysators, beispielsweise während der Kaltstartphase.

Das Heizelement selbst ist durch ein elektrisches Heizelement ausgebildet. Dies kann eine Heizwendel oder auch eine Wabenanordnung sein. Insbesondere ist das Heizelement eine elektrische Widerstandsheizung, die sich beim Beaufschlagen mit einem elektrischen Strom in kürzester Zeit aufheizt und dann über Strahlung und/oder Konvektion den Katalysator aufheizt. Das Heizelement ist im Längsschnitt in Abgasströmungsrichtung muldenförmig ausgebildet. Das heißt, das Heizelement ist in dem geometrischen Verlauf eines Kegelstumpfes bzw. eines Trichters ausgebildet. Der Verlauf kann stufenförmig, aber auch durchgehend linear, progressiv bzw. degressiv im Längsschnitt, mithin in Abgasströmungsrichtung ausgebildet sein. Das Abgas strömt durch das Heizelement. Insbesondere, wenn es eine Art Heizgitter, Drahtgewebe oder Lochblech ist, durch die poröse Struktur. Im Sinne einer Heizwendel bzw. eines massiven Heizleiters umströmt das Abgas den Heizleiter. Das Abgas durchströmt aber dann die gesamte Heizleiterwendel zwischen den einzelnen Abständen der Heizleiterwicklungen. Die Anordnung des Heizleiters ist jedoch, wie bereits genannt, im Längsschnitt in Abgasströmungsrichtung muldenförmig ausgebildet. Der Heizleiter selbst ist dann entweder massiv ausgebildet oder kann auch aus einem porösen Material, beispielsweise aus einem Drahtgeflecht ausgebildet sein. Bei dem Drahtgeflecht handelt es sich um ein Drahtgewebe bzw. ein Lochblech. Dies bietet weiterhin den Vorteil, dass das Heizelement nicht nur umströmt werden kann, sondern auch durch die jeweilige Porösität des Heizleiters hindurchgeströmt werden kann.

Damit das elektrische Heizelement in dem Abgasstrang angeordnet ist, ist erfindungsgemäß ein Halter vorgesehen. Das elektrische Heizelement ist mit dem Halter gekoppelt. Der Halter erstreckt sich mindestens über die Querschnittsfläche des Heizelementes. Der Halter selbst ist ebenfalls muldenförmig ausgebildet, so dass die Anordnung des Längsschnittes des Heizelementes in dem Abgasstrang sicher positioniert ist. Der Halter kann dann ebenfalls stufenförmig oder auch linear, progressiv oder degressiv im Längsschnitt verlaufen und ist somit an die Muldenform des Heizelementes angepasst.

Die Muldenform des Halters und auch die Muldenform des Heizelementes können dabei bevorzugt in Abgasströmungsrichtung selbst gerichtet sein. Dies bedeutet, der tiefste Punkt der Muldenform ist in Abgasströmungsrichtung gerichtet. Hierbei ist es dann insbesondere möglich, dass die Muldenform in einen Trichter innerhalb des Abgasstranges hineinragt und somit ein Maximum an zu überströmender Fläche des Heizelementes ausbilden und den Bauraum optimal ausnutzt.

Auch ist es im Sinne der Erfindung möglich, dass die Muldenform von der Abgasströmungsrichtung wegzeigend orientiert ist. Das bedeutet, dass der tiefste Punkt der Muldenform in Abgasströmungsrichtung als letztes angeströmt würde.

Der Halter kann hierzu derart hergestellt werden, dass zunächst aus einer Scheibe ein Stanzbauteil ausgebildet ist. Dann sind die bogenförmig verlaufenden Speichen mit ausgebildet. Im Anschluss wird der Halter dann tiefgezogen, so dass er in Abgasströmungsrichtung die muldenförmige bzw. trichterförmige, ggf. auch kegelstumpfabschnittsförmige Kontur erfährt.

Insbesondere ist der Halter radial umlaufend größer ausgebildet als das Heizelement selber. Der Halter kann somit in einem Gehäuse der Abgasnachbehandlungsvorrichtung angeordnet werden, insbesondere mit einer Innenmantelfläche gekoppelt werden. Der Halter hält dann das Heizelement von der Innenmantelfläche des Gehäuses beabstandet, bezogen auf die Radialrichtung.

Damit der Halter auch axial beabstandet das Heizelement selbst halten kann, ist der Halter selbst als scheibenförmiges, flächiges Element ausgebildet. Damit jedoch das Abgas durch den Halter hindurchströmen kann, ist der Halter selbst nicht als dichte Scheibe ausgebildet, sondern weist eine spinnennetzartige bzw. gitterartige Struktur auf. Diese Struktur ist erfindungsgemäß dadurch ausgebildet, dass die auf die Radialrichtung bezogene Innenfläche des Halters durch bogenförmig verlaufende miteinander gekoppelte Speichen ausgebildet ist. Diese bogenförmigen Speichen folgen dabei einer Splinefunktion bzw. haben einen kurvenförmigen Verlauf. Die Bogenform der einzelnen Speichen bewirkt die besondere thermomechanische Festigkeit des Halters. Mithin werden Ausdehnungen bzw. Kontraktionen aufgrund unterschiedlicher Temperaturbereiche aufgrund der Bogenform bestmöglich kompensiert.

Das Heizelement ist dann über einzelne Koppelpunkte oder Haltepunkte mit dem Halter gekoppelt. Durch die gute thermomechanische Festigkeit erfahren somit die Befestigungspunkte eine nur geringe Positionsänderung aufgrund von Ausdehnungen oder Kontraktionen, was sich wiederum auch auf die thermomechanische Festigkeit des mit dem Halter gekoppelten Heizelement auswirkt.

Eine Speiche muss im Sinne der Erfindung nicht von einem außen umlaufenden Rahmen oder Kontur radial nach innen zu einer Nabe laufen. Eine Speiche im Sinne der Erfindung ist eine in den Innenbereich des Halters verlaufende Verbindung. Eine radiale nach innen verlaufende Orientierung bedeutet nicht geradlinig nach innen verlaufend, sondern dass die Speiche generell eine Orientierung zu einem radial gerichteten Innenraum des Halters aufweist.

Der Halter weist im Wesentlichen einen außen umlaufenden Ring auf. Von diesem sind die Speichen zum einen radial nach innen orientiert. Zum anderen sind die Speichen dann aber im Längsschnitt in Abgasströmungsrichtung muldenförmig ausgebildet, so dass sich die Muldenform des Halters bzw. Trichters in Seitenansicht ergibt. Insbesondere kann dies durch einen Tiefziehprozess hergestellt werden.

Nach dem Trennverfahren bzw. Stanzverfahren wird dann insbesondere ein Umformprozess durchgeführt, um die Muldenform auszubilden.

Insgesamt ergibt sich durch die Muldenform die Möglichkeit, dass zum einen das Heizelement strömungsoptimiert in dem Abgasstrang angeordnet ist. Ferner kann durch die Muldenform und den damit einhergehenden Versatz mehr Heizfläche bereitgestellt werden, als bei einem nur ausschließlich im Wesentlichen zweidimensionalen ausgebildeten Scheibenkörper. Die zu überströmende Oberfläche ist somit aufgrund der Muldenform vergrößert ausgebildet.

Die Speichen verbinden sich somit zu einem im Wesentlichen unregelmäßigen Stützgitter und ermöglichen es somit, Verbindungspunkte über die gesamte Querschnittsfläche des Heizleiters zu schaffen. Gleichzeitig ist der Strömungswiderstand äußerst gering, da die Speichen, bezogen auf den gesamten Querschnitt des Gehäuses der Abgasnachbehandlungskomponente weniger als 20 %, insbesondere weniger als 15 % und ganz besonders bevorzugt weniger als 10 % der Querschnittsfläche bedecken. In dem Halter sind große Ausschnittsflächen vorhanden, so dass das Abgas nahezu in zu vernachlässigender Weise im Strömungswiderstand gesteigert durch den Halter und das Heizelement strömen kann. Die Zwischenbereiche zwischen den Speichen sind somit strömungsoffen ausgebildet bzw. ausgeschnitten.

Der Halter kann beispielsweise als Stanzbauteil oder auch als ausgeschnittenes Bauteil durch ein Lasertrennverfahren oder ähnliches aus einem metallischen Werkstoff, insbesondere aus einem abgasresistenten Edelstahlwerkstoff hergestellt sein, insbesondere kommt hier ein ferritischer oder austenitischer Werkstoff zum Einsatz.

Besonders bevorzugt sind jeweils zwei benachbarte Speichen, die zueinander gegenläufig, bezogen auf die Bogenform, verlaufen. Dies kann die thermische Resistenz aufgrund unterschiedlicher Ausdehnungsverhalten nochmals weiter verbessern.

Damit nunmehr das Heizelement mit dem Halter gekoppelt ist, sind Abstandshalter vorgesehen. Hierbei handelt es sich insbesondere um Keramikhülsen. Die Keramikhülsen haben den Vorteil, dass diese thermisch resistent und elektrisch nicht leitend ausgebildet sind. Besonders bevorzugt wird dann ein Stift die Keramikhülsen durchgreifend mit dem Halter und dem Heizelement gekoppelt. Somit ist das Heizelement axial beabstandet von dem Halter formschlüssig lagefixiert angeordnet, gleichzeitig auch elektrisch isoliert. Bei Beaufschlagung des Heizelementes mit einem elektrischen Strom kommt es somit nicht zu einem Kurzschluss mit dem Gehäuse der Abgasnachbehandlungskomponente.

In einer weiteren bevorzugten Ausgestaltungsvariante sind die Stifte, welche auch Befestigungsstifte genannt werden können, unter einer Vorspannung angeordnet. Die Vorspannung wird insbesondere erreicht, indem die Stifte punktgeschweißt werden. Bei Umgebungstemperatur wird somit erreicht, dass während des Schweißvorganges eine hohe thermische Einwirkung stattfindet und die Stifte formschlüssig verschweißt sind. Kühlt nunmehr der Stift ab, kontrahiert sich der Stift und spannt somit Halter und Heizelement, gekoppelt über die keramische Abstandshülse vor. Ein loser Sitz, Klappern oder auch thermische Spannung oder Ausdehnungen werden somit sichergehend vermieden.

Der vorgenannte Effekt kann besonders bevorzugt dadurch verbessert werden, dass zwei Befestigungsstifte von entgegengesetzten Seiten, also aufeinander zugerichtet, eingesetzt werden. Diese Stifte werden dann an den sich berührenden Spitzen miteinander gekoppelt, insbesondere verschweißt. Überschüssiges Material schmilzt auf und die axiale Länge, der sich zwei ergebenden Stifte entspricht dann am Ende des Schweißvorganges dem Abstand von Heizelement, Abstandshülse und Halter. Es wird eine Passung hergestellt. Nach dem Schweißvorgang kontrahiert sich das Material, so dass die zwei miteinander gekoppelten Stifte in ihrer Axialrichtung sich kontrahieren und somit das Heizelement über den Abstandshalter in Form der Keramikbuchse an den Halter koppeln, wobei die Stifte unter einer Vorspannung bzw. Zugspannung stehen. Bei einem späteren Erwärmen im Betrieb, also Abgas strömt, führt somit eine Ausdehnung der Stifte aufgrund der Vorspannung nicht zu einem Klappern bzw. losen Halten. Die Lebensdauer der Halterung wird somit erhöht.

Die Speichen selbst sind bevorzugt einstückig und werkstoffeinheitlich in dem Halter ausgebildet.

Der Halter selbst kann in einer weiter bevorzugten Ausgestaltungsvariante auch selbst mehrlagig ausgebildet sein. Hierbei gibt es dann bevorzugt drei Blechlagen. Zwei äußere Blechlagen sind als jeweiliges Klemmblech oder Halterblech ausgebildet. Eine mittlere Blechlage ist als Distanzblech ausgebildet. Eine jeweilige Keramikhülse kann somit mit einem Bund in eine Öffnung des Distanzbleches eingelegt werden. Ein in Axialrichtung vorgeschaltetes Klemmblech fixiert dann den Bund der Distanzhülse in dem Halter selber. Die einzelnen Lagen können miteinander gekoppelt werden, insbesondere stoffschlüssig, beispielsweise durch einen Lötvorgang oder auch einen Schweißvorgang. Auch kann dieser Blechverbund zunächst hergestellt werden und im Anschluss daran ein Umformvorgang zur Herstellung der Muldenform durchgeführt werden.

In einer weiteren bevorzugten Ausgestaltungsvariante ist das Heizelement sandwichartig zwischen zwei Haltern, bezogen auf die Abgasströmungsrichtung, angeordnet. Dies bedeutet, ein Halter ist dem Heizelement in Abgasströmungsrichtung vorgeschaltet und ein weiterer Halter dem Heizelement in Abgasströmungsrichtung nachgeschaltet. Bezogen auf die Axialrichtung ist das Heizelement somit optimal gehalten, selbst bei hohen Strömungsgeschwindigkeiten des durch die Abgasnachbehandlungskomponente strömenden Abgases.

Weitere Vorteile, Merkmale und Eigenschaften der vorliegenden Erfindung sind Gegenstand der nachfolgenden Beschreibung. Vorteilhafte Ausgestaltungsvarianten werden in schematischen Figuren dargestellt. Diese dienen dem einfachen Verständnis der Erfindung.
- Figur 1: eine Explosivdarstellung einer erfindungsgemäßen Abgasbehandlungsvorrichtung,
- Figur 2: eine Draufsicht bzw. Stirnansicht auf einen erfindungsgemäßen Halter mit dahinter liegendem Heizelement,
- Figur 3a und b: eine jeweilige Schnittansicht gemäß Figur 2,
- Figur 4: eine Detailansicht aus Figur 3 und
- Figur 5: eine alternative Ausgestaltungsvariante eines Heizelementes, welche zwischen zwei Haltern in Abgasströmungsrichtung angeordnet ist.

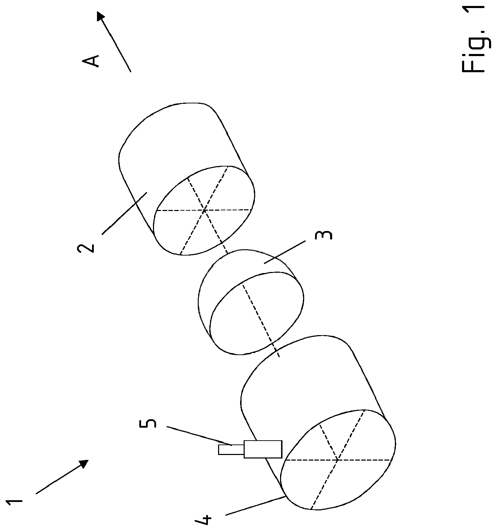

Figur 1 zeigt eine erfindungsgemäße Abgasbehandlungvorrichtung 1 zur Anordnung in einem Abgasstrang eines Kraftfahrzeuges. Hierzu ist ein Katalysator 2 mit in einer in Abgasströmungsrichtung A vorgelagertem Heizelement 3 in einem Gehäuse 4 angeordnet. An dem Gehäuse 4 können elektrische Anschlüsse 5 vorhanden sein, so dass das in dem Gehäuse 4 angeordnete Heizelement 3 mit elektrischem Strom beaufschlagbar ist. In Abgasströmungsrichtung A selbst ist das Heizelement 3 muldenförmig ausgebildet. Die Muldenform kann auch als Kegelstumpf bzw. Pyramidenform oder Trichterform bezeichnet werden. Auch kann die Ausbildung in Abgasströmungsrichtung A nach dem geometrischen Prinzip einer Schüssel bezeichnet werden.

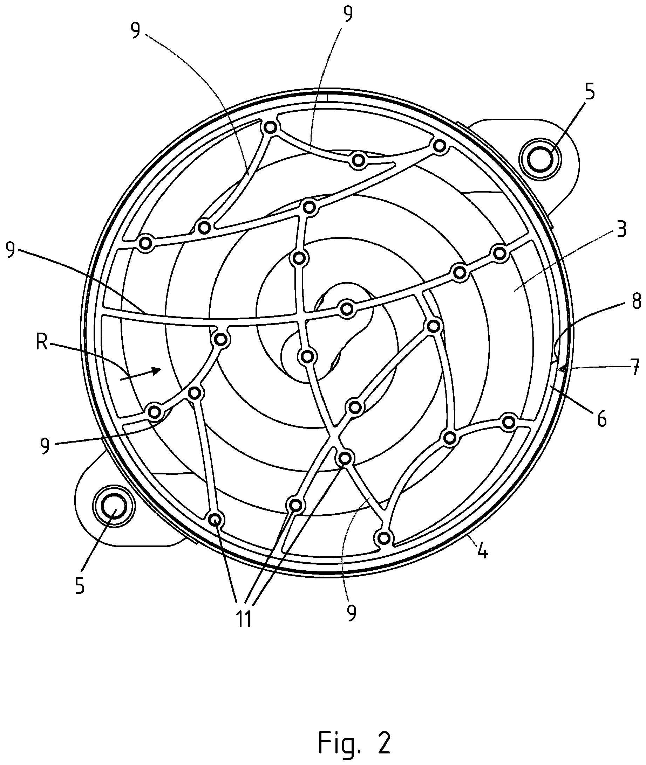

Figur 2 zeigt eine Stirnansicht auf das Heizelement 3 in dem Gehäuse 4. Dem Heizelement 3 ist in Abgasströmungsrichtung A ein erfindungsgemäßer Halter 6 vorgelagert. Das Heizelement 3 ist als spiralförmig gewundener Heizleiter ausgebildet.

Der Halter 6 ist selbst durch eine gitterartige Struktur ausgebildet. Ein außen umlaufender Rahmen bzw. eine außen umlaufende Kontur 7 bzw. Ring des Halters 6 ist mit einer Innenmantelfläche 8 des Gehäuses 4 gekoppelt. Dies kann beispielsweise über Löten oder Schweißen erfolgen. Von der außen umlaufenden Kontur 7 erstrecken sich dann in Radialrichtung R nach innen bezogen einzelne Speichen 9, welche eine gitterartige Struktur ausbilden. Die Speichen 9 selbst verlaufen jeweils gekrümmt bzw. bogenförmig. Die Speichen 9 sind in dieser Ausgestaltungsvariante unregelmäßig zueinander verteilt.

Bevorzugt sind jeweils zwei benachbarte oder angrenzende Speichen 9 gegenläufig verlaufend.

Die Querschnittsfläche des Halters 6 überdeckt somit im Wesentlichen die Querschnittsfläche der Innenmantelfläche 8 des Gehäuses 4. Zwischen den Speichen 9,mithin zwischen der gitterartigen Struktur des Halters 6 sind jedoch Aussparungen vorgesehen, so dass bevorzugt mehr als 80, insbesondere mehr als 85, besonders bevorzugt mehr als 90 und ganz besonders bevorzugt mehr als 95 % der Querschnittsfläche zum Durchströmen des Abgases bereitgestellt werden. Mithin wirkt sich der Halter 6 in zu vernachlässigender Weise auf den Strömungswiderstand des durch die Abgasbehandlungsvorrichtung 1 strömenden Abgases aus.

Das Heizelement 3 weist einen entsprechenden Abstand 10 zu der Innenmantelfläche 8 des Gehäuses 4 auf. Die thermische Ausdehnung des Heizelementes 3 führen somit nicht dazu, dass das Heizelement 3 in Radialrichtung R einen Kontakt mit dem Gehäuse 4 hätte, so dass es zu einem elektrischen Kurzschluss käme.

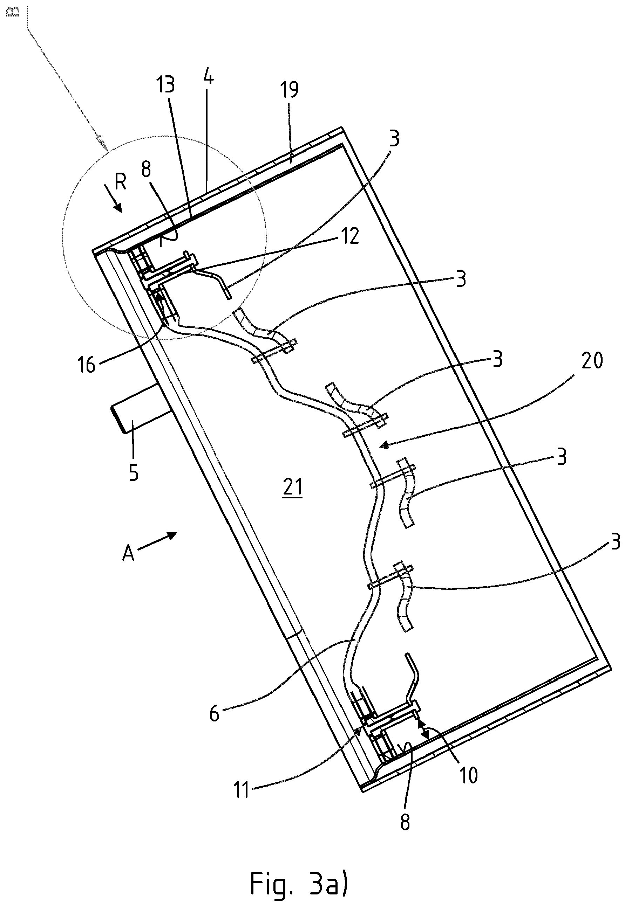

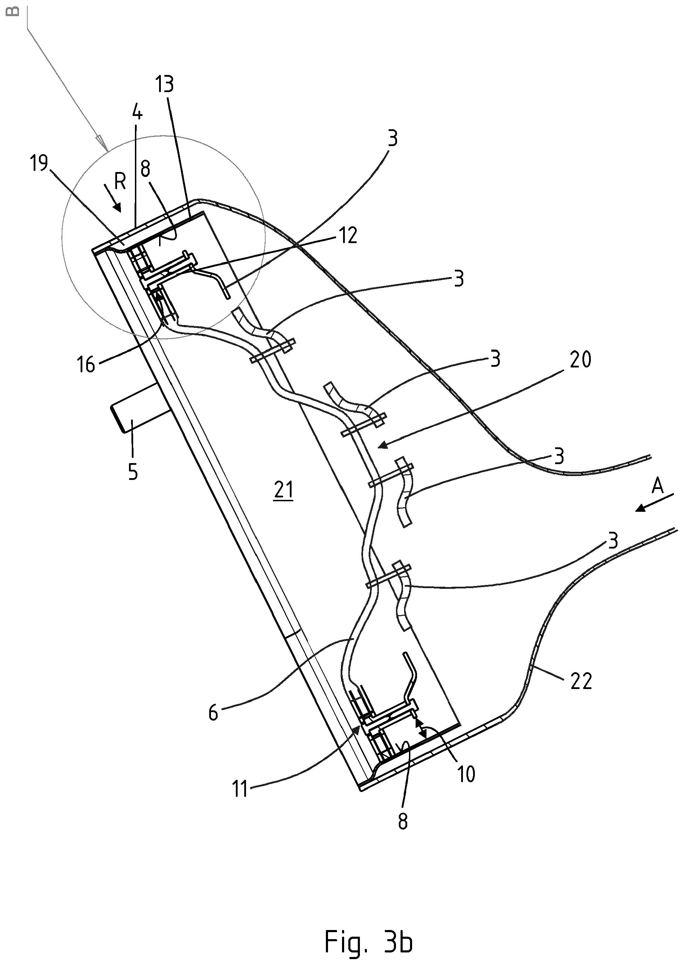

Figur 3 zeigt einen Längsschnitt in Abgasströmungsrichtung A. Hierbei sind die einzelnen Wicklungen des Heizelementes 3 zu erkennen. Das Heizelement 3 ist somit im Längsschnitt in Abgasströmungsrichtung A im Wesentlichen muldenförmig ausgebildet. Gleiches gilt für den Halter 6. Auch dieser ist in Abgasströmungsrichtung im Längsschnitt muldenförmig ausgebildet. Der Verlauf kann wie hier stufenförmig bzw. lagenförmig ausgebildet sein, um insbesondere die einzelnen Wicklungen eines Heizleiters des Heizelementes 3 aufzunehmen.

Der tiefste Punkt 20 der Muldenform ist von der Abgasströmungsrichtung A wegzeigend orientiert. Dies bedeutet im Sinne der Erfindung, dass in Abgasströmungsrichtung A der tiefste Punkt 20 der Muldenform als letztes angeströmt wird.

Auf den einzelnen Speichen 9 sind sodann Befestigungspunkte 11 angeordnet. Diese Befestigungspunkte 11 weisen einen Abstandhalter 12 auf, welcher insbesondere eine Keramikhülse ist. Über den Abstandhalter 12 ist dann das Heizelement 3 mit dem Halter 6 selber gekoppelt. Bevorzugt sind auf einer Speiche 9 drei Befestigungspunkte 11 ausgebildet. Somit kann über den gesamten Verlauf der Speiche 9 und unter Prüfung der thermischen Ausdehnung ein optimales Kompensationsverhältnis von gegebener Haltefunktion und Kompensation der thermischen Ausdehnung erreicht werden.

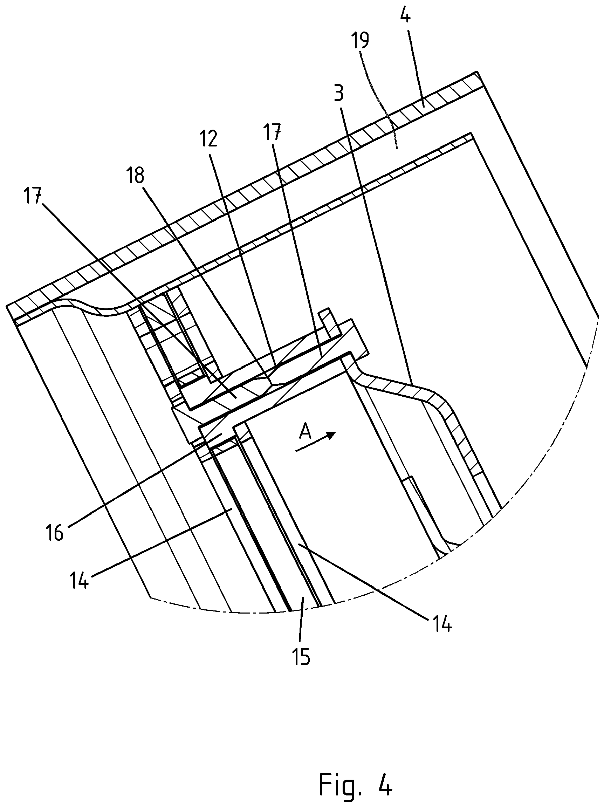

Hierbei ist zu erkennen, dass ein Einsatzblech 13 in dem Gehäuse 4 selbst angeordnet ist, welches in Radialrichtung R beabstandet zu der eigentlichen Innenmantelfläche 8 des Gehäuses 4 ist. Somit ist der Halter 6 in diesem Falle an der Innenmantelfläche 8 des Einsatzbleches 13 gekoppelt. Es ergibt sich ein Luftspalt 19 zur thermischen Isolierung. Das Einsatzblech 13 ist bevorzugt als Hülse ausgebildet. Was in Figur 3 und 4 dargestellt ist, ist, dass der Halter 6 selbst dreilagig ausgebildet ist. Dieser weist zwei in Axialrichtung außenliegende Haltebleche 14 auf sowie ein der Mitte liegende Distanzblech 15. Hierdurch wird folgender erfindungsgemäßer Effekt erreicht. Die Abstandhalter 12 in Form von Keramikhülsen weisen einen oben liegenden Bund 16 auf. Der Bund 16 wird in eine entsprechende Öffnung des Distanzbleches 15 angeordnet und sodann durch einen in Abgasströmungsrichtung A vor- und nachgelagertes Halteblech formschlüssig lagefixiert. Damit ist der jeweilige Abstandhalter 12 bzw. die jeweilige Keramikhülse an dem Halter 6 formschlüssig lagefixiert. Die einzelnen Lagen können untereinander stoffschlüssig gekoppelt sein. Insbesondere wird dies in der Vergrößerungsansicht gemäß Figur 4 nochmals deutlich. Nunmehr wird dann das Heizelement 3 mit einem Befestigungsstift 17 bzw. einem Bolzen formschlüssig an ein axiales Ende eines Abstandhalters 12 angelegt und über den Befestigungsstift 17 formschlüssig lagefixiert. Hier werden von zwei Seiten Befestigungsstifte 17 eingesetzt, welche in einem mittleren Koppelpunkt 18, beispielsweise durch Widerstandspunktschweißen miteinander gekoppelt sind. Der Befestigungsstift 16 auf Seiten des Halters 6 hat ausschließlich Anlagenkontakt an dem Abstandhalter 12, welche elektrisch isoliert ist. Somit kommt keine stromleitende Verbindung von Heizelement 3 zum Abstandhalter 12 zustande.

Gemäß Figur 3b ist die Abgasströmungsrichtung A umgekehrt. Der tiefste Punkt 20 der Muldenform ist somit in Abgasströmungsrichtung A hin bzw. zu der Abgasströmungsrichtung A orientiert angeordnet. Dies bedeutet, der tiefste Punkt 20 wird als erstes in Abgasströmungsrichtung A vom Abgas angeströmt. Die Öffnung 21 der Muldenform ist von der Abgasströmungsrichtung A weg orientiert.

In Figur 3a ist die Öffnung 21 der Muldenform in Abgasströmungsrichtung A orientiert angeordnet.

Gemäß der Figur 3b kann somit ein Trichter 22 bzw. ein trichterförmiges Element oder auch ein Diffusor optimal im Bauraum hinsichtlich der Anordnung eines Heizelementes 3 angeordnet sein, da die Muldenform sich geometrisch an die Trichterform anpasst und somit den Bauraum optimal ausnutzt.

In Figur 3a ist das Heizelement 3 in Abgasströmungsrichtung A dem Halter 6 nachgelagert. In Figur 3b ist das Heizelement 3 in Abgasströmungsrichtung A dem Halter 6 vorgelagert. Das Heizelement 3 kann jedoch gemäß Figur 3b auch dem Halter 6 nachgelagert sein.

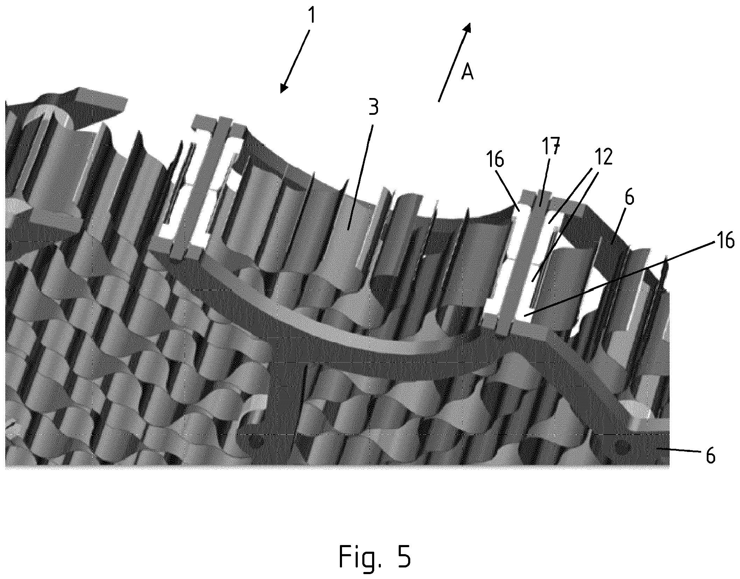

Figur 5 zeigt eine Schnittansicht durch eine weitere Ausgestaltungsvariante. Hier ist in Abgasströmungsrichtung 1 ein Halter 6 dem Heizelement 3 vorgeschaltet und ein weiterer Halter 6 des Heizelementes nachgeschaltet. Das Heizelement 3 selbst ist durch wellenförmig ausgebildete Blechlagen ausgebildet. In Draufsicht bzw. in Sicht der Abgasströmung ergibt sich somit eine wabenartige Struktur. Durch die vor- und nachgelagerten Halter 6 wird diese wabenförmige Struktur auch in Radialrichtung R mit Festigkeit ausgestattet. Es dann wiederum Abstandhalter 12 zwischen den Haltern 6 angeordnet. Auf den Abstandhaltern 12 selber ist dann das Heizelement 3 mit einem jeweils axialen Abstand 10 angeordnet. Ein Befestigungsstift 17 durchgreift die Abstandhalter 12 und koppelt die gegenüberliegenden Halter 6 formschlüssig. Der Befestigungsstift 17 kann dann mit den Haltern 6 jeweils beispielsweise punktgeschweißt oder verlötet werden. Die Abstandshalter 12 weisen jeweils einen Bund 16 auf, so dass das Heizelement 3 zwischen den Bunden 16 formschlüssig lagefixiert ist und damit insbesondere elektrisch isoliert von den Haltern 6 in der Abgasbehandlungsvorrichtung angeordnet ist.

### Bezugszeichen:

- 1 -: Abgasbehandlungsvorrichtung
- 2 -: Katalysator
- 3 -: Heizelement
- 4 -: Gehäuse
- 5 -: elektrischer Anschluss
- 6 -: Halter
- 7 -: Rahmen/Kontur
- 8 -: Innenmantelfläche zu 4
- 9 -: Speiche
- 10 -: Abstand
- 11 -: Befestigungspunkt
- 12 -: Abstandhalter
- 13 -: Einsatzblech
- 14 -: Halterblech
- 15 -: Distanzblech
- 16 -: Bund
- 17 -: Befestigungsstift
- 18 -: Koppelpunkt
- 19 -: Luftspalt
- 20 -: tiefster Punkt
- 21 -: Öffnung
- 22 -: Trichter

- R -: Radialrichtung
- A -: Abgasströmungsrichtung

## Patentansprüche

1. Abgasbehandlungsvorrichtung (1) zur Anordnung in einem Abgasstrang eines Kraftfahrzeuges, aufweisend ein Heizelement (3), welches einer Abgasnachbehandlungskomponente, insbesondere einem Katalysator (2) zugeordnet ist, wobei das Heizelement (3) durch einen Heizleiter und einen mit diesem gekoppelten Halter (6) ausgebildet ist **dadurch gekennzeichnet**, , wobei der Halter (6) sich über die Querschnittsfläche des Heizelementes (3) erstreckt und der Halter (6) durch eine gitterartige Struktur ausgebildet ist, dass die gitterartige Struktur durch unregelmäßig miteinander gekoppelte bogenförmige Speichen (9) ausgebildet ist, wobei das Heizelement (3) und der Halter (6) im Längsschnitt in Abgasströmungsrichtung (A) eine muldenförmige Konfiguration aufweisen.

2. Abgasbehandlungsvorrichtung (1) nach Anspruch 1, **dadurch gekennzeichnet, dass** der Halter (6) aus einem metallischen Werkstoff ausgebildet ist,.

3. Abgasbehandlungsvorrichtung nach Anspruch 1 oder 2, **dadurch gekennzeichnet, dass** das Heizelement (3) ein gewundener Heizleiter ist.

4. Abgasbehandlungsvorrichtung nach einem der vorangehenden Ansprüche, **dadurch gekennzeichnet, dass** zwei benachbarte bogenförmige Speichen (9) gegenläufige Bogenformen aufweisen.

5. Abgasbehandlungsvorrichtung (1) nach einem der vorangehenden Ansprüche, **dadurch gekennzeichnet, dass** an einer bogenförmigen Speiche (9) mindestens ein Befestigungspunkt (11) zur Koppelung mit dem Heizelement (3) vorgesehen ist.

6. Abgasbehandlungsvorrichtung (1) nach einem der vorangehenden Ansprüche, **dadurch gekennzeichnet, dass** das Heizelement (3) eine wabenartige Struktur aufweist und als elektrisch betriebenes Heizelement (3) ausgebildet ist oder dass das Heizelement (3) ein Heizleiter ist, welcher insbesondere ein gewundenes Lochblech oder Drahtgeflecht ist.

7. Abgasbehandlungsvorrichtung (1) nach einem der vorangehenden Ansprüche, **dadurch gekennzeichnet, dass** zwischen Heizelement (3) und Halter (6) elektrisch isolierende, thermisch resistente Koppelungsmittel angeordnet sind.

8. Abgasbehandlungsvorrichtung (1) nach einem der vorangehenden Ansprüche, **dadurch gekennzeichnet, dass** zwei Halter das Heizelement sandwichartig zwischen sich aufnehmen.

9. Abgasbehandlungsvorrichtung (1) nach einem der vorangehenden Ansprüche, **dadurch gekennzeichnet, dass** als Koppelungsmittel eine Abstandsbuchse ausgebildet ist, sowie ein die Abstandsbuchse durchgreifender Stift, wobei die Abstandsbuchse elektrisch isoliert ausgebildet ist.

10. Abgasbehandlungsvorrichtung (1) nach Anspruch 9, **dadurch gekennzeichnet, dass** in einem Koppelungsmittel zwei gegenläufig aufeinander zu zeigende Befestigungsstifte (17) angeordnet sind, welche an ihren Spitzen miteinander gekoppelt sind.

11. Abgasbehandlungsvorrichtung (1) nach einem der vorangehenden Ansprüche, **dadurch gekennzeichnet, dass** der Halter (6) mit einer außen zumindest abschnittsweise, umlaufenden Kontur (7) in einem Gehäuse der Abgasnachbehandlungskomponente gekoppelt ist, wobei die Speichen (9) dann einstückig und werkstoffeinheitlich von der Kontur (7) radial orientiert nach innen angebunden sind und untereinander gekoppelt sind.
